# EUROPEAN PATENT APPLICATION

(11) **EP 3 882 017 A1**
(43) Date of publication of application: **22.09.2021**
(21) Application number: 20164454.9
(22) Date of filing: 20.03.2020
(51) Int. Cl.: B32B 7/12, B32B 7/05, B32B 27/08, B32B 27/18, B32B 27/30, B32B 27/32, A01G 9/14

(54) **MULTILAYER PLASTIC FILM FOR AGRICULTURAL USE**

(71) Applicant: Daios, Asterios, 59200 Naoussa (GR)
(72) Inventor: Daios, Dimitrios, 54622 Thessaloniki (GR)
(74) Representative: Von Rohr Patentanwälte Partnerschaft mbB

(57) **Abstract**

The present invention relates to the technical field of agricultural films and in particular refers to a multilayer plastic film for agricultural applications comprising light-emission shifting properties. Furthermore, the present invention relates to the use of the multilayer plastic film for, in particular perennial, agricultural applications.

## Description

The present invention relates to the technical field of agricultural films.

In particular, the present invention relates to a multilayer plastic film for agricultural applications comprising light-emission shifting properties. Furthermore, the present invention relates to the use of the multilayer plastic film for, in particular perennial, agricultural applications.

The agriculture industry is increasingly confronted with the challenges of an ever-progressive urbanization, constantly growing world population and changing climate conditions - to name only a few - which on the one hand demands for consistent and high agronomic yields as well as reliable and appropriate food qualities and on the other hand for a more sustainable, eco- and climate-friendly agriculture.

One essential aspect in this context is to assure and ideally improve the growth and yield of crop plants.

Generally, plants evolve from seed to sprout and then go through vegetative, budding, flowering and ripening stages. As plants grow, their nutritional needs change. However, during all development stages, plants need air, light, warmth, water and distinctive nutrients. An optimal growth of a plant accordingly depends on an appropriate balance of these different contributing factors.

Specifically, light directly influences plant growth and flowering by inducing a plants' morphogenesis as well as photosynthesis, wherein light energy is converted into chemical energy stored in the form of carbohydrates. Accordingly, plants are dependent on light to generate nutritional components, induce the growing cycle and allow for proper development. Without light, most plants would not be able to grow or reproduce.

Overall, the interactions of plants with light are complex. However, particular areas of light, or the visible spectrum of the electromagnetic spectrum, respectively, are more relevant for photosynthesis and morphogenesis than others. Generally, visible light is defined as having wavelengths in the range of approx. 380 to 760 nm. The key areas involved in photosynthesis are the blue range, which corresponds to wavelengths of between 400 to 500 nm, and the red range, which corresponds to wavelengths of between 600 to 700 nm. The mechanism of morphogenesis in turn is highly dependent on the species of plant involved.

Strictly controlled or predictable light conditions, however, are only possible under artificial conditions, e.g. indoor and by means of so called grow lights, which attempt to provide a light spectrum ideally adapted to the plant's needs. Anyhow, indoor culturing of crop plants today is just in the research stage and classical agriculture prevails. Here, the crop cultures naturally rely on sunlight and depend on weather and climate conditions.

At the same time, sunlight can as well cause damage to the crop plants, in particular during the summer months and even more pronounced in greenhouses or low tunnels, in which the crop is cultivated.

For example, direct and too intense sunlight can cause skin burns of the plants as well as such extreme temperatures that the stomata of the leaves close, which decelerates or even stops photosynthesis and thus the overall growth of the plant. Also, dehydration results, leading to plant stress thus drastic reduction of the yield.

Hence, there is particular need on the one hand to shade the crop plants, in particular during the months when sunlight becomes very intense, and on the other hand, to provide ideal light conditions for the plants to ensure proper growth and reliably high crop yields.

In the past, several respective efforts to address these issues have been made.

For example, CN 103660485 A proposes the use of several films at a distance of approximately 15 cm, wherein one of the films is electrochromic using a photochromic compound, to provide adjustable shading. This solution, however, is expensive regarding the installation while at the same time lacking durability as the photochromic compound is not protected from oxidation.

The European patent EP 3 291 666 B1 refers to a multilayer plastic film for perennial agricultural use either in greenhouses or under low tunnels that self-adjusts the shading provided in the covered space. The shading is achieved by incorporating a photochromic compound or a combination of photochromic compounds in a layer of multiple layers in a multilayer film.

The aforementioned documents only address the issue of providing sufficient shade by means of adjustable films to crop plants in the event of too intense sun light. A directed and more efficient use of sunlight, however, is not addressed.

The international application WO 2014/013186 A1 relates to optically active encapsulation materials for improving the photosolar conversion efficiency, constituted by a transparent matrix containing a plurality of optically active constituents absorbing light energy in a first wavelength and re-emitting energy in a second wavelength.

However, the materials encapsulated in the matrix, which can be made up of a film of ethylene vinyl acetate (EVA) or polymethyl methacrylate (PMMA) are not protected against environmental, e. g. chemical, influences so that the outdoor applicability of the film matrices and in particular durability of the encapsulated materials is only very limited.

Accordingly, a need for durable applications that allow for both, sufficiently shading the crops in outdoor fields against too intense sunlight and using the spectrum of sunlight in a manner that beneficially influences the crops growth and yield, exists still.

It is therefore an objective of the present invention to avoid or at least mitigate the disadvantages and problems associated with the state of the art described above.

In particular, one objective of the present invention is to provide a durable application that shields crops against intense and potentially harmful sunlight and at the same time allows for using the sunlight in a manner, that the development of the crop plants is positively influenced so that crop yields can ideally be improved.

Subject-matter of the present invention according to a first aspect of the present invention is a multilayer plastic film for agricultural applications comprising light-emission shifting properties.

Further subject-matter of the present invention according to a second aspect of the present invention is the use of a multilayer plastic film for, in particular perennial, agricultural applications, preferably in and/or on greenhouses or low tunnels.

It is understood that particular features, in particular special embodiments or the like, which are mentioned in the following and are only described in relation to one aspect of the present invention, apply also in relation to the other aspects of the present invention, without this requiring any express mention.

Furthermore, for all relative or percentage, in particular weight-related, quantities or amounts stated below, it is to be noted that, within the context of this invention, these are to be selected by the person skilled in the art in such a way that the sum of the ingredients, additives or auxiliary substances or the like always results in 100 percent or 100 percent by weight. This, however, goes without saying for the person skilled in the art.

In addition, all of the parameters specified below can be determined by standardized or explicitly specified determination methods or by common determination methods known per se by the person skilled in the art.

With this provision made, the subject-matter of the present invention is explained in more detail in the following.

The subject-matter of the present invention - according to a **first** aspect of the present invention - is a multilayer plastic film for agricultural applications comprising light-emission shifting properties, wherein the light-emission shifting properties are depend on ambient light conditions and are generated by at least one luminescent compound, wherein the luminescent compound is incorporated into at least one layer A of the multilayer plastic film and wherein the at least one luminescent compound-comprising layer A is embedded between at least two further layers B that have oxygen barrier properties, so that the luminescent compound-comprising layer A, in particular the luminescent compound, is protected from oxidation.

As was surprisingly found in the context of the present invention, the multilayer plastic films of the present invention comprise stable and durable light-emission shifting properties by means of the inventive multilayer-configuration, while at the same time the light-emission shifting properties are not diminished or eliminated by the multilayer-configuration.

Commonly, one would have expected that the incorporation of a luminescent compound into a layer A of a multilayer plastic film that is embedded between at least two further layers B, in particular even further layers C and D, reduces the luminescent properties of the compound down to levels, where no more light-emission shifting effects are observed. In particular, outer layers, which preferably are configured to serve as sealing layers, are relatively thick and thus could be assumed to disturb the luminescent properties of the compounds used in the inventive multilayer plastic films.

The applicant, however, found that the configuration of the multilayer plastic films according to the invention does not influence or even reduce the light-emission shifting properties of the inventive plastic films while at the same time the durability and life-time of the inventive films, in particular the luminescent compound-comprising layer A, is increased to a range, that advantageously allows perennial use of the inventive multilayer plastic films.

Particularly, with the inventive multilayer plastic films it is possible to intensify the growth and yield of crops, over which the inventive multilayer plastic film is mounted, significantly by means of an effective use of the in terms of plant development most relevant fractions or areas of the sun light. Specifically, with the inventive multilayer plastic films photosynthesis of the crops is enhanced which correspondingly contributes to a better energy supply of the crops and thus enables better and more reliable growth.

At the same time, the multilayer plastic films according to the present invention are configured in such a way, that the respectively shielded crops are protected effectively against too intense sun light as well as extreme temperatures, both of which could negatively affect the growth and yield of crops.

It is an essential advantage of the present invention that by means of the luminescent compound-comprising layer A, the wavelength of light that is absorbed by the layer or luminescent compound, respectively, is shifted to longer wavelengths of lower frequencies and energies. Particularly, the luminescent compound-comprising layer A is configured in such a way, that the wavelength of in particular energy-rich fractions, e.g. in the UV-area, of the absorbed light is shifted to wavelengths of preferably between 400 to 490 nm which corresponds to the blue range of the visible spectrum. This is particularly advantageous for the photosynthetic processes in crops as the major absorption maxima of the central components of photosynthesis, i.e. chlorophyll a and chlorophyll b, lie at approx. 430 nm and 460 nm, respectively, thus allowing for increased photosynthesis or photosynthesis rates, respectively.

In addition, the luminescent compound-comprising layer is preferably further configured in such a way, that also light in the green range of the visible spectrum is absorbed by the luminescent compound and successively emitted with shifted wavelengths in the red range preferably ranging from 650 nm to 720 nm, which advantageously covers the second absorption maxima of chlorophyll a (approx. 660 nm) and chlorophyll b (approx. 650 nm).

This has the overall advantage, that by means of the inventive multilayer plastic film comprising light-emission shifting properties in particular light with an increased blue and red content can be generated and emitted on the crops covered by the inventive plastic films. Consequently, photosynthesis and successively the production and storage of energy in the form of carbohydrates can be intensified leading to overall increased and improved growth and yield of crops.

In this context, it is particularly preferred if the luminescent compound is a photoluminescent compound, in particular fluorescent compound, preferably organic fluorescent compound.

In the context of the present invention, a luminescent compound is understood to be a compound that spontaneously emits light as a result of a process different from heating. Particularly, luminescent compounds in the context of the present invention emit light as a result of the absorption of photons, which is also known as photoluminescence. Specifically, photoluminescence is initiated by photoexcitation (i.e. photons that excite electrons to a higher energy level in an atom). Following the excitation, various relaxation processes typically occur in which other photons are re-radiated or emitted, respectively.

Lastly, fluorescence constitutes a specific form of photoluminescence and in the context of the present invention is understood to be a process initiated by the absorption of photons, particularly of the UV-region of the electromagnetic spectrum, upon which different relaxation processes follow during which light of a longer wavelength and lower energy is emitted.

Organic compounds in the context of the present invention are understood to be compounds or molecules, respectively, that are mainly composed of carbon, hydrogen, oxygen, nitrogen, sulfur and/or phosphorus.

Examples of luminescent, in particular photoluminescent, preferably fluorescent, compounds preferably used in the context of the present invention are aromatic compounds comprising a conjugated π-system, in particular polycyclic aromatic compounds, and/or heteroaromatic compounds comprising a conjugated π-system and heteroatoms like nitrogen, oxygen and/or sulfur. Particularly preferred compounds are for example selected from perylenes, anthracenes, phenantrenes, tetracenes, pentacenes, benzooxazoles, mixtures and derivatives thereof. In this context, derivatives are understood to be compounds which are derived from one of the above-mentioned parent compounds and in addition carry further substituents, i.e. functional groups or carbon-based residues.

According to the present invention, it is further preferred, if the luminescent compound is incorporated into a core layer or several inside layers of the multilayer plastic film.

Here, particularly good results are obtained, if the luminescent compound-comprising layer A comprises, in particular consists of, polymers or copolymers of polyethylene (PE), in particular low-density polyethylene (LDPE) and/or linear low-density polyethylene (LLDPE), ethylene-butyl acrylate (EBA), ethylene-vinyl acetate (EVA) or mixtures thereof, preferably ethylene-vinyl acetate (EVA), more preferably with high vinyl-acetate (VA) content.

Hence, in the context of the present invention it is preferred, if the luminescent compound is incorporated into a polymeric matrix comprising a material with thermoplastic properties. Advantageously, this can also contribute to a simplified production process of the inventive plastic film as the use of thermoplastic materials allows for production methods based on extrusion or coextrusion techniques which is particularly preferred in the production of plastic films.

Furthermore, it is preferably provided, that the luminescent compound-comprising layer A forms the inner core of the inventive multilayer plastic films or is arranged in such a way, that several layers A are located inside the multilayer plastic film forming thus at least two layers or areas where the light-emission shifting properties of the luminescent compound-comprising layer A are present. On the basis of this configuration of the inventive multilayer plastic films, the layer A, which comprises the luminescent compound, is in particular protected effectively against environmental influences, in particular oxidation by means of atmospheric oxygen.

This constitutes a particular advantage of the present invention as otherwise the durability, resilience and longevity in particular of the layer A, which comprises the luminescent compound, is significantly decreased.

To ensure that the further layers B have reliable oxygen barrier properties, it is particularly preferred in the context of the present invention, that the further layers B comprise, in particular consist of, polymers or copolymers of ethylene vinyl alcohol (EVOH).

By using these materials, it is in particular ensured that oxidizing substances from the environment, in particular atmospheric oxygen, are prevented from reaching the layer A which comprises the luminescent compound. Harmful influences, i.e. oxidants that could react with the luminescent compounds and thus interfere with their luminescent properties, can be effectively shielded of. This preferably results in a reliable functionality and enhanced longevity of the layer A as well as the entire multilayer plastic film.

According to a preferred embodiment of the present invention it may further be provided that the multilayer plastic film has a multilayer structure, in particular is a multilayer coextruded film, wherein the film comprises the following sequence of layers:
- Layer B1:: layer having oxygen barrier properties comprising, in particular consisting of, EVOH,
- Layer A1:: luminescent compound-comprising core layer comprising, in particular consisting of, LDPE, LLDPE, EVA, EBA or mixtures thereof, preferably EVA, more preferably with high VA content,
- Layer B2:: layer having oxygen barrier properties comprising, in particular consisting of, EVOH,
in particular wherein the layers B1 and B2 comprise a similar or from another different composition.

For this embodiment, it is particularly preferred, if the multilayer plastic film comprises the above sequence of layers as inside layers, in particular core layers. This means that the above sequence of layers as an entity is enclosed by further layers. Accordingly, it is preferably provided, that the multilayer plastic film comprises several further layers, e.g. further interlayers, outer layers, bonding layers or the like.

Good results can be obtained in the context of the present invention, if the multilayer plastic film in addition comprises further layers D, in particular at least one outer layer, preferably two outer layers, more preferably wherein the further, in particular outer, layer D is a sealing layer.

Here, it is particularly advantageous, if the further, in particular outer, layer D comprises, in particular consists of, materials selected from polyolefins, in particular selected from low-density polyethylene (LDPE), linear low-density polyethylene (LLDPE), ethylene-vinyl acetate (EVA) or mixtures thereof.

The above materials are in particular advantageous to use in the context of the present invention as these display high resiliencies and are able to withstand higher temperatures of up to 80 °C or even 90 °C, which is particularly important for applications of the inventive plastic films in summer and/or in regions with a generally intense insolation. In addition, the above-listed materials have thermoplastic properties, which in particular allows for processing them via extrusion or coextrusion processes which in particular facilitates an efficient manufacture of the inventive plastic films.

Also, it may be provided, that the layers of the multilayer plastic film are joined, in particular bonded, by means of a bonding layer C. In this regard, particularly good results are obtained in the context of the present invention, if the bonding layer C is configured in such a way that the layer C is preferably compatible with the polyolefinic material used for the layer D as well as the oxygen barrier material used for the layer B.

According to a further preferred embodiment of the present invention it is preferably provided, that the multilayer plastic film has a seven-layer structure, in particular is a seven-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1 and C2 and/or D1 and D2 comprise a similar or from another different composition.

This embodiment of the present invention is particularly preferred as it provides for very robust and endurable plastic films that are ideally suited for perennial use. The respective plastic films can withstand extreme weather ranging from very intense insolation to heavy rain and wind. At the same time, multilayer plastic films with a seven-layer structure in particular still reliably show the inventive light-emission shifting properties by means of the luminescent compound-comprising core layer A1, which preferably provides the crops, over which the multilayer plastic film is mounted, with sunlight enriched in blue- and red-light contents.

According to a further preferred embodiment of the present invention, it may particularly be provided, that the multilayer plastic film has a nine-layer structure, in particular is a nine-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer C3: | bonding layer, |
| Layer A1: | luminescent compound-comprising core layer comprising, in particular consisting of, LDPE, LLDPE, EVA, EBA or mixtures thereof, preferably EVA, more preferably with high VA content, |
| Layer C4: | bonding layer, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1, C2, C3 and C4 and/or D1 and D2 comprise a similar or from another different composition.

For this preferred embodiment of the present invention, the robustness, resilience and longevity of the inventive plastic films can be increased even further.

In addition, it may further be provided in the context of a further preferred embodiment of the present invention, that the multilayer plastic film has a nine-layer structure, in particular is a nine-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer A0: | core layer comprising, in particular consisting of, LDPE, LLDPE, EVA, EBA or mixtures thereof, preferably EVA, more preferably with high VA content, |
| Layer A2: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers A1 and A2 and/or B1 and B2 and/or C1 and C2 and/or D1 and D2 comprise a similar or from another different composition.

According to this embodiment, in particular a thick core section comprising two luminescent compound-comprising core layers A1 and A2 is provided which contributes to a very effective and thorough absorption of the above-mentioned fractions of the sunlight and consequently, increased emission of light with high blue and red contents.

As regards the installation and setup of the inventive multilayer plastic films, it has proven advantageous, if the multilayer plastic film is superimposed and welded with continuous or discontinuous welds on a conventional monolayer or multilayer greenhouse or low tunnel film.

Alternatively, it may also be provided, that at least one multilayer plastic film, preferably in the form of stripes, is welded along the length of the film on one or both surfaces of a conventional monolayer or multilayer greenhouse or low tunnel film.

Focusing on the light emission-shifting properties, it is particularly preferred in the context of the present invention, if the luminescent compound redshifts absorbed light to emit light of higher wavelengths and lower frequencies, in particular shifts absorbed light from the UV-range to emit light in the blue and cyan range and/or shifts absorbed light from the green and/or yellow range to emit light in the orange and red range of the visible spectrum of the electromagnetic spectrum.

Thus, in the context of the present invention it is specifically preferred, if the luminescent compound absorbs light with wavelengths in the range from 360 to 400 nm and emits light with wavelengths in the range from 400 to 490 nm and/or absorbs light with wavelengths on the range from 510 to 580 nm and emits light with wavelengths in the range from 650 to 720 nm.

Accordingly, the inventive multilayer plastic film overall can absorb the above-mentioned specific fractions of the sunlight and shift the wavelength of these fractions in such a manner, that light with increased blue and red contents is emitted within the space that is cover by the inventive films. Crops covered by the inventive multilayer plastic films thus can be provided with light comprising in particular high contents of such radiation that has wavelengths which in particular match the absorption maxima of chlorophyll. Accordingly, processes dependent on chlorophyll, i.e. photosynthesis, can be intensified which advantageously corresponds to enhanced development, growth and, finally, yield mass of the crops.

In this context, reference is also made to the international application WO 2014/013186 A1, wherein the entire disclosure of this is incorporated herein.

Particularly, as was already mentioned above, luminescent compounds of the present invention are preferably selected from: organic luminophores (Stokes effect), inorganic luminophores (anti-Stokes and persistent effect), optically active molecules such as scintillating organic crystals with N+1, N+2, N+3, N+x anthracene ϕ rings, perylene or derivatives, pentacene, or organic luminophores such as diphenyl, carbazol stilbene or derivatives, selected such that the emission spectra of some correspond to the absorption spectra of the other.

Perylene for example is a chemical compound of formula C₂₀H₁₂ or C₃₂H₁₆. This is an aromatic hydrocarbon presented as a brown solid. Perylene emits blue or red fluorescence, and thus can be used as a blue or red dopant for organic LEDs, optionally substituted. It is also an organic photoconductor. It has maximum absorption at 434 nm with a molar extinction coefficient of 38,500 M-Icm-I at 435.75 nm, and has low solubility in water (1.2×10-5 mmol/l), like all the other polycyclic aromatic compounds. All the carbon atoms of perylene are sp²-hybridized, which explains why the central cycle is not shown as a fifth benzene ring (since then two carbon atoms would be sp hybridized and the molecule would lose a portion of the aromatic character and the fluorescent properties thereof). The structure of perylene has been intensively studied by X-ray diffractometry.

Pentacene is a chemical compound of formula C₂₂H₁₄ belonging to the polycyclic aromatic hydrocarbon (PAH) family and formed by five benzene rings fused in line. The extended conjugated structure and the crystalline structure thereof mean that pentacene is a good p-type organic semiconductor (electron donor). It forms excitons therein by absorption of ultraviolet or visible radiation, making it highly sensitive to oxidation: this is the reason why, although it has the appearance of a red powder when it has just been synthesized, it gradually turns green when exposed to open air and light. Pentacene is a promising material for the production of thin-film transistors and of organic field-effect transistors. The holes therein have a mobility of 5.5 cm².V⁻¹·s⁻¹, which is close to the level of amorphous silicon. It forms p-n junctions with fullerene C₆₀, which are used to manufacture organic photovoltaic cells.

For the component of the highest level N: 5,12-bis(phenylethynyl)naphthacene, also abbreviated as BPEN, is a polycyclic aromatic hydrocarbon of formula C₃₄H₂₀ used as a fluorochrome for chemiluminescent tubes; it emits an orange light. This is an n-type organic semiconductor.

The used compounds transform high-frequency photons (250 to 700 nm) into low-frequency photons (700 to 950 nm) by means of their fluorescent properties wherein certain compounds are taken as intermediaries in the transport of energy from sunlight. The substances are selected such that their absorption spectra constitute consecutive zones, making it possible to cover the entire solar spectrum in the area (250-700 nm) (overlapping frequencies or wavelengths).

Hence, an implementation of the above, optically active components in core or inner layers A of the inventive plastic films in particular results in a so-called light cascade. "Light cascade" in the sense of the present invention is understood to refer to the wavelength transfer occurring by the association of a series of different luminescent components selected such that the emission wavelength of one type of compound corresponds to the absorption wavelength of another type of compound, each of the types of compounds being defined by an emission wavelength which is different from the absorption wavelength. Overall, it is thus in particular achieved that the sunlight absorbed by the inventive multilayer plastic films is emitted from the multilayer plastic film in such a way, that the emitted light is in particular rich in blue and red contents.

Furthermore, in particular to ensure a reliable functionality of the inventive plastic films, it may be provided in the context of the present invention, that the layers, in particular the outer, preferably sealing, layer and/or the layer having oxygen barrier properties, comprise durability-extending additives, in particular comprise antioxidants, UV-radiation stabilizers, UV-absorbers or mixtures thereof.

The figures show according to
- Fig. 1: a greenhouse or a low tunnel mounted with the multilayer plastic film comprising light-emission shifting properties,
- Fig. 2: a cross section of a multilayer plastic film in the form of a three-layer structure, in particular three-layer coextruded film,
- Fig. 3: a cross section of a multilayer plastic film in the form of a seven-layer structure, in particular seven-layer coextruded film,
- Fig. 4: a schematic depiction of the operating principle of the inventive multilayer plastic film,
- Fig. 5: a cross section of a multilayer plastic film in the form of a seven-layer structure, in particular seven-layer coextruded film, mounted on a conventional plastic film for greenhouses or low tunnels,
- Fig. 6: a cross section of two multilayer plastic films in the form of seven-layer structures, in particular seven-layer coextruded films, installed on both sides of a conventional plastic film for greenhouses or low tunnels,
- Fig. 7: a section of an inventive multilayer plastic film mounted on top of a conventional plastic film for greenhouses with discontinuous welds
- Fig. 8: an inventive multilayer plastic film mounted on top of a conventional plastic film for greenhouses with discontinuous welds and a detail thereof,
- Fig. 9: a section of stripes of an inventive multilayer plastic film mounted on top of a conventional plastic film for greenhouses a detail thereof,
- Fig. 10: stripes of an inventive multilayer plastic film mounted on top of a conventional plastic film for greenhouses a detail thereof.

Further subject-matter of the present invention - according to a **second** aspect of the present invention - is the use of a multilayer plastic film according to the invention for, in particular perennial, agricultural applications, preferably in and/or on greenhouses or low tunnels, more preferably to improve crop growth.

For further details on the use in accordance with the present invention, reference is made to the above explanations on the inventive multilayer plastic film which apply accordingly to the inventive use.

The subject-matter of the present invention is explained in the following in a non-restrictive manner by means of the figures on the basis of preferred forms and embodiments of the subject-matter of the present invention.

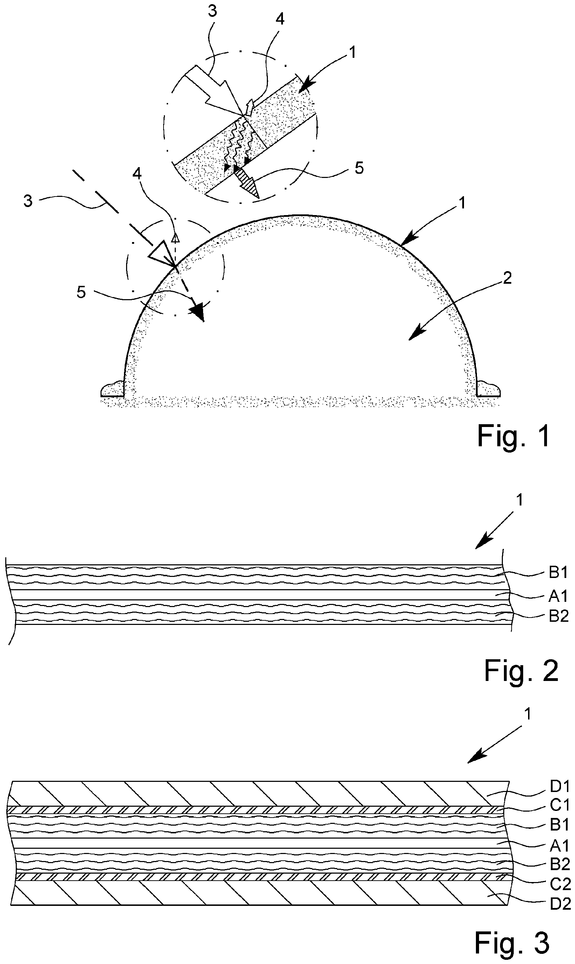

Fig. 1 shows an exemplary application of an inventive multilayer plastic film (1) comprising emission-shifting properties. The plastic film (1) is mounted on a conventional greenhouse (2).

According to the exemplary embodiment depicted in Fig. 1, the plastic film (1) is configured such that it is permeable for most fractions of natural sunlight (3). However, a distinctive amount (4) of sunlight (3) is shielded off by the plastic film (1) ensuring thus, that crops in the greenhouse (2) are not confronted with too intense sunlight. By this, the plastic film (1) achieves efficient as well as decent shading which protects crops in the greenhouse e.g. from sunburns but in turn does not negatively influence their growth and development.

The fractions (5) of the sunlight, that are not backscattered but able to permeate through the plastic film (1) into the inner part of the greenhouse or low tunnel (2) lie in and/or are shifted to the blue and red ranges of the visible spectrum. These ranges are particularly ground setting for and involved in photosynthetic processes in plants. Light fractions in the UV-range and green-range, in contrast, are absorbed by the light-emission shifting compounds incorporated into the plastic film (1).

In detail, upon absorption of radiation with wavelengths corresponding to the UV- and green area of the visible light, the light-emission shifting compounds undergo first excitation and successively several relaxation processes, in the course of which the compounds emit specifically radiation with wavelengths in the ranges of blue and cyan and/or orange and red light. Hence, in addition to the natural blue and red contents within sunlight (3), the plastic film (1) provides for an enrichment of the light entering the greenhouse (6) with additional blue, cyan, orange and/or red contents on the basis of the light-emission shifting compounds in the inventive plastic films. The plastic films (1) according to the present invention achieve in particular an intensification of plant growth as well as an increase in crop yields on the basis of the above-explained operating principle. A particular advantage in this context constitutes also the fact, that the plastic films (1) specifically absorb light in the UV-range which ensures a reliable supply of crops in the greenhouse (6) with blue and red contents enriched light even in the event of cloudy weather. Accordingly, the inventive plastic films (1) can operate properly and, most importantly, independently of specific weather conditions.

Fig. 2 shows a preferred embodiment of the plastic film (1) according to the invention wherein the multilayer plastic film comprises an inside, in particular inner core, in the form of a three-layer structure, in particular within a multilayer coextruded film (1), which comprises the following sequence of layers:

| | |
|---|---|
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |

in particular wherein the layers B1 and B2 comprise a similar or from another different composition.

In particular for the layer A, specifically A1 in this embodiment, it is preferably provided that the luminescent compound of the layer A, in particular core layer A1, is selected from aromatic compounds comprising a conjugated π-system, in particular polycyclic aromatic compounds, and/or heteroaromatic compounds comprising a conjugated π-system and heteroatoms like nitrogen, oxygen and/or sulfur. Particularly preferred compounds are for example selected from perylenes, anthracenes, phenantrenes, tetracenes, pentacenes, benzooxazoles, mixtures and derivatives thereof.

The luminescent compounds are in particular configured to redshift absorbed light, meaning that the luminescent compounds mentioned above are selected and in particular composed or mixed in such a way, that light with wavelengths in the range from 360 to 400 nm is absorbed and light with wavelengths in the range from 400 to 490 nm is emitted. Similarly, is it preferably intended that the luminescent compounds absorb light with wavelengths on the range from 510 to 580 nm and emit light with wavelengths in the range from 650 to 720 nm.

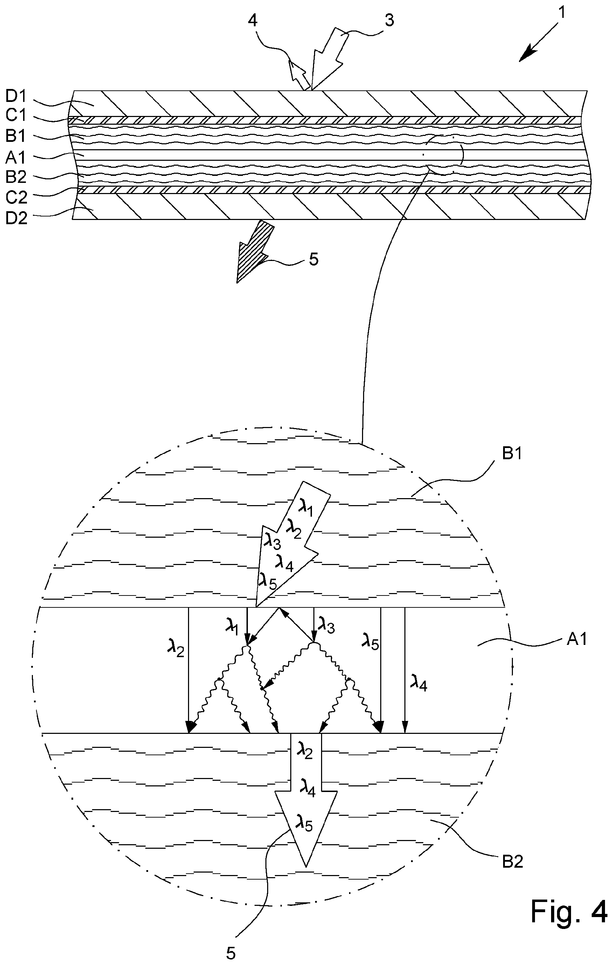

Accordingly, the luminescent compounds in particular transform high-frequency photons (250 to 700 nm) into low-frequency photons (700 to 950 nm) by means of their luminescent, preferably fluorescent, properties wherein certain compounds are taken as intermediaries in the transport of energy from sunlight, as is also shown in Fig. 4. The substances are selected such that their absorption spectra constitute consecutive zones, making it possible to cover the entire solar spectrum, which in Fig. 4 is resembled by the arrow depicting sunlight having the exemplary wavelengths λ 1 to λ 5 representing the visible area (250-700 nm).

An implementation of the above, optically active components into the core layer A1 of the inventive plastic films in particular results in a so-called light cascade, which means that the wavelength transfer occurres via the association of a series of different luminescent compounds selected such that the emission wavelength of one type of compound corresponds to the absorption wavelength of another type of compound, each of the types of compounds being defined by an emission wavelength which is different from the absorption wavelength. Light of certain wavelengths, e.g. λ 1 and λ 3 (that correspond to UV- or green light), as a result of the light cascade-effect, is thus shifted to wavelengths λ 2, λ 4 and λ 5 (corresponding to blueish or reddish light), which are longer, lower in energy and reduced in frequency. At the same time, fractions of the sunlight that lie in the range of λ 2, λ 4 and λ 5 are not absorbed by the luminescent compounds in the layer A1, but can directly permeate though the layer A1.

Overall, it is thus in particular achieved that the sunlight absorbed by the inventive multilayer plastic films is emitted from the multilayer plastic film in such a way, that the emitted light is in particular rich in blue and red contents.

In Fig. 3, a further preferred embodiment of the present invention is depicted. According to Fig. 3, a plastic film (1) that has a seven-layer structure, in particular is a seven-layer coextruded film, wherein the film (1) comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1 and C2 and/or D1 and D2 comprise a similar or from another different composition, is shown.

This embodiment of the present invention is particularly preferred as it provides for very robust and endurable plastic films (1) that are ideally suited for perennial use. The respective plastic films (1) can withstand extreme weather ranging from very intense insolation to heavy rain and wind.

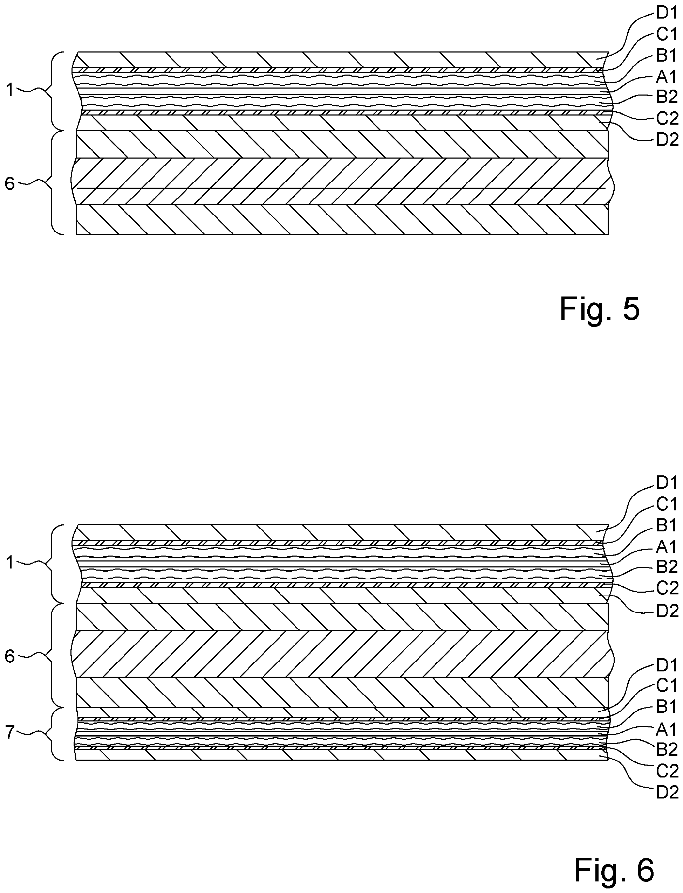

The Fig. 5 and 6 show further preferred, advantageous applications of the inventive plastic film (1), which according to Fig. 5 can be mounted on top of a conventional greenhouse plastic film (6). Also, it is possible to install the inventive plastic film (1) on both sides of a conventional greenhouse plastic film (6), as is shown in Fig. 6, which achieves an even more efficient concentration of red and blue light contents in the light conducted into the greenhouse. In this context, it may be particularly preferred to use a combination of an in relation to another thicker plastic film (1) and thinner plastic film (7), as this allows to benefit from the combinatory effect of the two light emission shifting multilayer plastic films used while at the same time being able to reduce material and/or production costs.

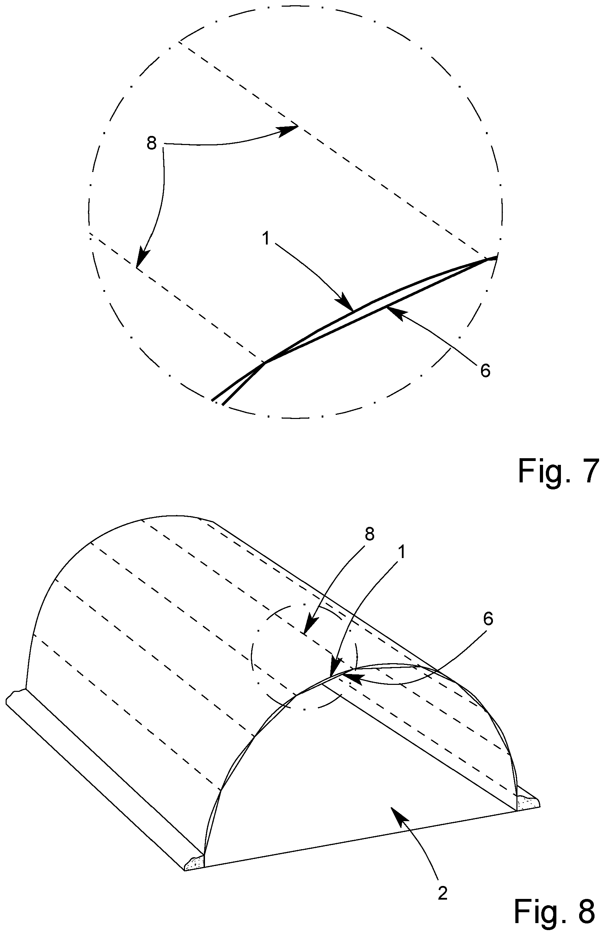

The Fig. 7 and 8 depict a further preferred embodiment of the present invention according to which the plastic film (1) is mounted on a conventional greenhouse or low tunnel film (6) on top of its entire surface. This is preferably performed by welding the plastic film (1) on the greenhouse or low tunnel plastic film (6) so that the greenhouse or low tunnel (2) is provided with light-emission shifting properties by means of the inventive plastic film (1). The welds (8) can be at the whole width of the films or at some distinct sections, and can further be continuous or discontinuous, as shown in the Fig. 7 and 8, such that the superimposed plastic film (1) comprising luminescent compounds is firmly attached on the conventional plastic film (6).

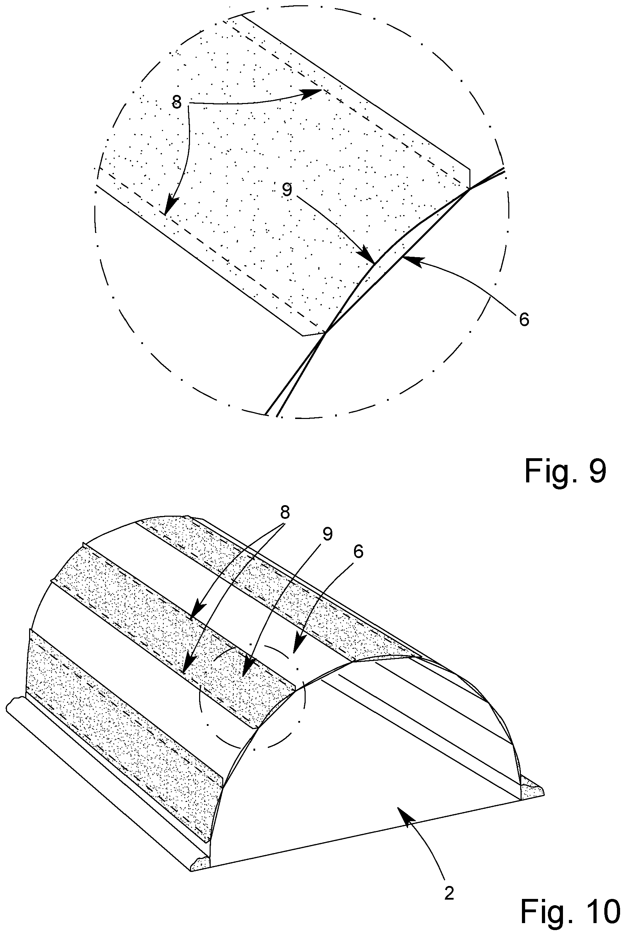

Lastly, another preferred embodiment of the present invention is depicted in Fig. 9 and 10. According to this embodiment, the inventive plastic film (1) is mounted only partly of top of a conventional greenhouse or low tunnel film (6). In this context, it is specifically preferred, if the plastic film (1) is attached to the film (6) in the form of stripes (9) alongside the greenhouse or low tunnel (2). This embodiment is particularly suited for cases, where only a partial radiation of crops with red- and blue-enriched sunlight is needed or afforded. This may for example be the case for such crops, that require a broader spectrum of light, e.g. due to their morphogenetic specifications.

### Reference signs:

| | | | |
|---|---|---|---|
| 1 | multilayer plastic film | 6 | conventional plastic film |
| 2 | greenhouse / low tunnel | 7 | thin multilayer plastic film |
| 3 | sunlight | 8 | welds |
| 4 | shielded light | 9 | plastic film stripes |
| 5 | permeated, red and/or blue shifted light | | |

## Claims

1. Multilayer plastic film for agricultural applications comprising light-emission shifting properties,
**characterized in that**
the light-emission shifting properties are depend on ambient light conditions and are generated by at least one luminescent compound, wherein the luminescent compound is incorporated into at least one layer A of the multilayer plastic film and wherein the at least one luminescent compound-comprising layer A is embedded between at least two further layers B that have oxygen barrier properties, so that the luminescent compound-comprising layer A, in particular the luminescent compound, is protected from oxidation.

2. Multilayer plastic film according to claim 1, **characterized in that** the luminescent compound is a photoluminescent compound, in particular fluorescent compound, preferably organic fluorescent compound.

3. Multilayer plastic film according to claims 1 or 2, **characterized in that** the luminescent compound is incorporated into a core layer or several inside layers of the multilayer plastic film.

4. Multilayer plastic film according to one of the preceding claims, **characterized in that** the luminescent compound-comprising layer A comprises, in particular consists of, polymers or copolymers of polyethylene (PE), in particular low-density polyethylene (LDPE) and/or linear low-density polyethylene (LLDPE), ethylene-butyl acrylate (EBA), ethylene-vinyl acetate (EVA) or mixtures thereof, preferably ethylene-vinyl acetate (EVA), more preferably with high vinyl-acetate (VA) content.

5. Multilayer plastic film according to one of the preceding claims, **characterized in that** the further layers B that have oxygen barrier properties comprise, in particular consist of, polymers or copolymers of ethylene vinyl alcohol (EVOH).

6. Multilayer plastic film according to one of the preceding claims, **characterized in that** the multilayer plastic film has a three-layer structure, in particular is a three-layer coextruded film, wherein the film comprises the following sequence of layers:
| | |
|---|---|
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
in particular wherein the layers B1 and B2 comprise a similar or from another different composition.

7. Multilayer plastic film according to one of the preceding claims, **characterized in that** the multilayer plastic film comprises further layers D, in particular at least one outer layer, preferably two outer layers, more preferably wherein the further, in particular outer, layer D is a sealing layer.

8. Multilayer plastic film according to claim 7, **characterized in that** the further, in particular outer, layer D comprises, in particular consists of, materials selected from polyolefins, in particular selected from low-density polyethylene (LDPE), linear low-density polyethylene (LLDPE), ethylene-vinyl acetate (EVA) or mixtures thereof.

9. Multilayer plastic film according to one of the preceding claims, **characterized in that** the layers of the multilayer plastic film are joined, in particular bonded, by means of a bonding layer C.

10. Multilayer plastic film according to one of the preceding claims, **characterized in that** the multilayer plastic film has a seven-layer structure, in particular is a seven-layer coextruded film, wherein the film comprises the following sequence of layers:
| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |
in particular wherein the layers B1 and B2 and/or C1 and C2 and/or D1 and D2 comprise a similar or from another different composition.

11. Multilayer plastic film according to one of the preceding claims, **characterized in that** the multilayer plastic film has a nine-layer structure, in particular is a nine-layer coextruded film, wherein the film comprises the following sequence of layers:
| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer C3: | bonding layer, |
| Layer A1: | luminescent compound-comprising core layer comprising, in particular consisting of, LDPE, LLDPE, EVA, EBA or mixtures thereof, preferably EVA, more preferably with high VA content, |
| Layer C4: | bonding layer, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |
in particular wherein the layers B1 and B2 and/or C1, C2, C3 and C4 and/or D1 and D2 comprise a similar or from another different composition.

12. Multilayer plastic film according to one of the preceding claims, **characterized in that** the multilayer plastic film has a nine-layer structure, in particular is a nine-layer coextruded film, wherein the film comprises the following sequence of layers:
| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen barrier properties comprising, in particular consisting of, EVOH, |
| Layer A1: | luminescent compound-comprising core layer comprising, in particular consisting of, LDPE, LLDPE, EVA, EBA or mixtures thereof, preferably EVA, more preferably with high VA content, |
| Layer A0: | core layer comprising, in particular consisting of, LDPE, LLDPE, EVA, EBA or mixtures thereof, preferably EVA, more preferably with high VA content, |
| Layer A2: | luminescent compound-comprising core layer comprising, in particular consisting of, LDPE, LLDPE, EVA, EBA or mixtures thereof, preferably EVA, more preferably with high VA content, |
| Layer B2: | layer having oxygen barrier properties comprising, in particular consisting of, EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |
in particular wherein the layers A1 and A2 and/or B1 and B2 and/or C1 and C2 and/or D1 and D2 comprise a similar or from another different composition.

13. Multilayer plastic film according to one of the preceding claims, **characterized in that** the multilayer plastic film is superimposed and welded with continuous or discontinuous welds on a conventional monolayer or multilayer greenhouse or low tunnel film.

14. Multilayer plastic film according to one of the preceding claims, **characterized in that** at least one multilayer plastic film, preferably in the form of stripes, is welded along the length of the film on one or both surfaces of a conventional monolayer or multilayer greenhouse or low tunnel film.

15. Multilayer plastic film according to one of the preceding claims, **characterized in that** the luminescent compound redshifts absorbed light to emit light of higher wavelengths and lower frequencies, in particular shifts absorbed light from the UV-range to emit light in the blue and cyan range and/or shifts absorbed light from the green and/or yellow range to emit light in the orange and red range of the visible spectrum of the electromagnetic spectrum.

16. Multilayer plastic film according to one of the preceding claims, **characterized in that** the layers, in particular the outer, preferably sealing, layer and/or the layer having oxygen barrier properties, comprise durability-extending additives, in particular comprise antioxidants, UV-radiation stabilizers, UV-absorbers or mixtures thereof.

17. Use of a multilayer plastic film according to one of claims 1 to 16 for, in particular perennial, agricultural applications, preferably in and/or on greenhouses or low tunnels, more preferably to improve crop growth.

## Amended claims

### Amended claims in accordance with Rule 137(2) EPC.

1. Multilayer plastic film for agricultural applications comprising light-emission shifting properties, wherein the light-emission shifting properties are depend on ambient light conditions and are generated by organic fluorescent compounds,
**characterized in that**
organic fluorescent compounds are selected from perylenes, anthracenes, phenantrenes, tetracenes, pentacenes, benzooxazoles, mixtures and derivatives thereof, and
wherein the organic fluorescent compounds are incorporated into at least one layer A of the multilayer plastic film, and
wherein the organic fluorescent compound-comprising layer A is embedded between at least two further layers B that have oxygen barrier properties, so that the organic fluorescent compound-comprising layer A, in particular the organic fluorescent compound, is protected from oxidation, and
wherein the multilayer plastic film has a three-layer structure, wherein the film comprises the following sequence of layers:
Layer B1: layer having oxygen barrier properties comprising EVOH,
Layer A1: organic fluorescent compound-comprising core layer comprising EVA, EBA or mixtures thereof,
Layer B2: layer having oxygen barrier properties comprising EVOH,
in particular wherein the layers B1 and B2 comprise a similar or from another different composition, and
wherein the multilayer plastic film comprises two outer layers D, wherein the outer layers D are sealing layers, and
comprise materials selected from low-density polyethylene (LDPE), linear low-density polyethylene (LLDPE), ethylene-vinyl acetate (EVA) or mixtures thereof.

2. Multilayer plastic film according to claims 1, **characterized in that** the luminescent compound is incorporated into a core layer or several inside layers of the multilayer plastic film.

3. Multilayer plastic film according to one of the preceding claims, **characterized in that** the luminescent compound-comprising layer A consists of polymers or copolymers of ethylene-butyl acrylate (EBA), ethylene-vinyl acetate (EVA) or mixtures thereof, preferably ethylene-vinyl acetate (EVA), more preferably with high vinyl-acetate (VA) content.

4. Multilayer plastic film according to one of the preceding claims, **characterized in that** the further layers B that have oxygen barrier properties consist of polymers or copolymers of ethylene vinyl alcohol (EVOH).

5. Multilayer plastic film according to one of the preceding claims, **characterized in that** the multilayer plastic film is a three-layer coextruded film, wherein the film comprises the following sequence of layers:
Layer B1: layer having oxygen barrier properties comprising, in particular consisting of, EVOH,
Layer A1: luminescent compound-comprising core layer comprising, in particular consisting of, EVA, EBA or mixtures thereof, preferably EVA, more preferably with high VA content,
Layer B2: layer having oxygen barrier properties comprising, in particular consisting of, EVOH,
in particular wherein the layers B1 and B2 comprise a similar or from another different composition.

6. Multilayer plastic film according to one of the preceding claims, **characterized in that** the further outer layer D consists of materials selected from low-density polyethylene (LDPE), linear low-density polyethylene (LLDPE), ethylene-vinyl acetate (EVA) or mixtures thereof.

7. Multilayer plastic film according to one of the preceding claims, **characterized in that** the layers of the multilayer plastic film are joined, in particular bonded, by means of a bonding layer C.

8. Multilayer plastic film according to one of the preceding claims, **characterized in that** the multilayer plastic film has a seven-layer structure, in particular is a seven-layer coextruded film, wherein the film comprises the following sequence of layers:
Layer D1: outer sealing layer, comprising, in particular consisting of, materials selected from LDPE, LLDPE, EVA or mixtures thereof,
Layer C1: bonding layer,
Layer B1: layer having oxygen barrier properties comprising, in particular consisting of, EVOH,
Layer A1: luminescent compound-comprising core layer comprising, in particular consisting of, EVA, EBA or mixtures thereof, preferably EVA, more preferably with high VA content,
Layer B2: layer having oxygen barrier properties comprising, in particular consisting of, EVOH,
Layer C2: bonding layer,
Layer D2: outer sealing layer, comprising, in particular consisting of, materials selected from LDPE, LLDPE, EVA or mixtures thereof,
in particular wherein the layers B1 and B2 and/or C1 and C2 and/or D1 and D2 comprise a similar or from another different composition.

9. Multilayer plastic film according to one of the preceding claims, **characterized in that** the multilayer plastic film has a nine-layer structure, in particular is a nine-layer coextruded film, wherein the film comprises the following sequence of layers:
Layer D1: outer sealing layer, comprising, in particular consisting of, materials selected from LDPE, LLDPE, EVA or mixtures thereof,
Layer C1: bonding layer,
Layer B1: layer having oxygen barrier properties comprising, in particular consisting of, EVOH,
Layer C3: bonding layer,
Layer A1: luminescent compound-comprising core layer comprising, in particular consisting of, EVA, EBA or mixtures thereof, preferably EVA, more preferably with high VA content,
Layer C4: bonding layer,
Layer B2: layer having oxygen barrier properties comprising, in particular consisting of, EVOH,
Layer C2: bonding layer,
Layer D2: outer sealing layer, comprising, in particular consisting of, materials selected from LDPE, LLDPE, EVA or mixtures thereof,
in particular wherein the layers B1 and B2 and/or C1, C2, C3 and C4 and/or D1 and D2 comprise a similar or from another different composition.

10. Multilayer plastic film according to one of the preceding claims, **characterized in that** the multilayer plastic film has a nine-layer structure, in particular is a nine-layer coextruded film, wherein the film comprises the following sequence of layers:
Layer D1: outer sealing layer, comprising, in particular consisting of, materials selected from LDPE, LLDPE, EVA or mixtures thereof,
Layer C1: bonding layer,
Layer B1: layer having oxygen barrier properties comprising, in particular consisting of, EVOH,
Layer A1: luminescent compound-comprising core layer comprising, in particular consisting of, EVA, EBA or mixtures thereof, preferably EVA, more preferably with high VA content,
Layer A0: core layer comprising, in particular consisting of, EVA, EBA or mixtures thereof, preferably EVA, more preferably with high VA content,
Layer A2: luminescent compound-comprising core layer comprising, in particular consisting of, EVA, EBA or mixtures thereof, preferably EVA, more preferably with high VA content,
Layer B2: layer having oxygen barrier properties comprising, in particular consisting of, EVOH,
Layer C2: bonding layer,
Layer D2: outer sealing layer, comprising, in particular consisting of, materials selected from LDPE, LLDPE, EVA or mixtures thereof,
in particular wherein the layers A1 and A2 and/or B1 and B2 and/or C1 and C2 and/or D1 and D2 comprise a similar or from another different composition.

11. Multilayer plastic film according to one of the preceding claims, **characterized in that** the multilayer plastic film is superimposed and welded with continuous or discontinuous welds on a conventional monolayer or multilayer greenhouse or low tunnel film.

12. Multilayer plastic film according to one of the preceding claims, **characterized in that** at least one multilayer plastic film, preferably in the form of stripes, is welded along the length of the film on one or both surfaces of a conventional monolayer or multilayer greenhouse or low tunnel film.

13. Multilayer plastic film according to one of the preceding claims, **characterized in that** the luminescent compound redshifts absorbed light to emit light of higher wavelengths and lower frequencies, in particular shifts absorbed light from the UV-range to emit light in the blue and cyan range and/or shifts absorbed light from the green and/or yellow range to emit light in the orange and red range of the visible spectrum of the electromagnetic spectrum.

14. Multilayer plastic film according to one of the preceding claims, **characterized in that** the layers, in particular the outer, preferably sealing, layer and/or the layer having oxygen barrier properties, comprise durability-extending additives, in particular comprise antioxidants, UV-radiation stabilizers, UV-absorbers or mixtures thereof.

15. Use of a multilayer plastic film according to one of claims 1 to 14 for, in particular perennial, agricultural applications, preferably in and/or on greenhouses or low tunnels, more preferably to improve crop growth.
